# EUROPEAN PATENT APPLICATION

(11) **EP 4 641 706 A2**
(43) Date of publication of application: **29.10.2025**
(21) Application number: 25172581.8
(22) Date of filing: 25.04.2025
(51) Int. Cl.: H01M 4/62

(54) **ELECTRODE FOR RECHARGEABLE LITHIUM BATTERY AND RECHARGEABLE LITHIUM BATTERY INCLUDING THE SAME**

(30) Priority: 26.04.2024 KR 20240055856
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: Lee, Jin Hyon, 16678 Suwon-si, Gyeonggi-do (KR); Paik, Un Gyu, 06289 Seoul (KR); Song, Tae Seup, 03180 Seoul (KR); Kim, Ji Woon, 02858 Seoul (KR); Kim, Min Sung, 02782 Seoul (KR); Cho, Chae Woong, 16678 Suwon-si, Gyeonggi-do (KR)
(74) Representative: Gulde & Partner

(57) **Abstract**

An electrode for a rechargeable lithium battery and a rechargeable lithium battery including the same are disclosed, in which the nano-fibrillation of a fibrillable binder is promoted, and mechanical properties and electrical properties of a battery may be improved. An electrode includes a freestanding dry electrode film, and the freestanding dry electrode film includes an electrode active material, a binder, and a conductive additive, and the conductive additive includes a porous carbon black-based compound which has a specific surface area of 600 m²/g or more and exhibits a first maximum peak in a pore width range of 1 to 10 nm and a second maximum peak in a pore width range of 10 to 100 nm in a graph in which the x-axis represents the pore width and the y-axis represents a pore volume per unit weight of the porous carbon black-based compound.

## Description

### BACKGROUND

### 1. Field

Aspects of embodiments of the present disclosure relate to an electrode for a rechargeable lithium battery and a rechargeable lithium battery including the same.

### 2. Description of the Related Art

With the rapid spread of electronic devices that use batteries, such as mobile phones, laptop computers, and electric vehicles, the demand for rechargeable batteries with high energy density and high capacity has rapidly increased. Accordingly, research and development for improving performance of lithium ion rechargeable batteries is actively underway.

A rechargeable lithium battery is a battery including a positive electrode and a negative electrode including an active material which allows for intercalation and deintercalation of lithium ions and an electrolyte, and produces electrical energy through an oxidation-reduction reaction taking place when the lithium ions are intercalated and deintercalated to and from the positive electrode and the negative electrode.

Recently, research for manufacturing an electrode including a dry electrode film that does not use a solvent is actively underway. The dry electrode film generally includes an electrode active material, a binder, a conductive additive, and the like, and is manufactured in the form of a film.

The above-described information disclosed in the technology that serves as background of the present invention is provided to improve understanding of the background of the present invention and thus may include information that does not constitute the related art.

### SUMMARY

The invention is defined by the appended claims. The description that follows is subjected to this limitation. Any disclosure lying outside the scope of said claims is only intended for illustrative as well as comparative purposes.

According to an aspect of embodiments of the present invention, an electrode including a dry electrode film, in which the nano-fibrillation of a fibrillable binder is promoted, and a rechargeable lithium battery including the same are provided.

However, aspects and objectives of the present invention are not limited to those mentioned above, and other aspects and objectives may be clearly understood by those of ordinary skill in the art from the description of the invention given below.

According to one or more embodiments of the present invention, an electrode includes a freestanding dry electrode film, wherein the freestanding dry electrode film includes an electrode active material, a binder, and a conductive additive, and the conductive additive includes a porous carbon black-based compound which has a specific surface area of 600 m²/g or more and exhibits a first maximum peak in a pore width range of 1 to 10 nm and a second maximum peak in a pore width range of 10 to 100 nm in a graph in which the x-axis represents the pore width and the y-axis represents a pore volume per unit weight of the porous carbon black-based compound.

In one or more embodiments, the specific surface area of the carbon black-based compound is in a range from 600 m²/g to 1,000 m²/g.

In one or more embodiments, the first peak is present in a pore width range of 3 to 8 nm, and the pore volume per unit weight is in a range from 0.2 to 1.2 cm³/g.

In one or more embodiments, the second peak is present in a pore width range of 50 to 100 nm, and the pore volume per unit weight is in a range from 1.0 to 2.0 cm³/g.

In one or more embodiments, the carbon black-based compound includes one or more of carbon black, acetylene black, Ketjen black, channel black, furnace black, lamp black, and thermal black.

In one or more embodiments, the carbon black-based compound is included in an amount of 90 wt% or more of the conductive additive.

In one or more embodiments, the binder is included in a fibrillated state in the dry electrode film.

In one or more embodiments, the binder includes polytetrafluoroethylene (PTFE), a polyolefin, or a mixture thereof.

In one or more embodiments, the electrode active material is a positive electrode active material or a negative electrode active material.

In one or more embodiments, the carbon black-based compound is prepared by subjecting the carbon black-based compound to heat treatment at a temperature of 650 °C or lower for more than 0 minutes and less than or equal to 90 minutes.

### BRIEF DESCRIPTION OF THE DRAWINGS

The following drawings included with the present specification illustrate some example embodiments of the present invention and are provided to facilitate understanding of the technical idea of the present invention together with the detailed description of the invention given below; however, the present invention is not to be limited on the basis of the drawings.
FIGS. 1 to 4 are schematic diagrams illustrating a rechargeable lithium battery according to some embodiments.
FIGS. 5 to 7 show transmission electron microscopy (TEM) analysis results of carbon black input to a dry electrode film of each of an Example 1, an Example 2, and a Comparative Example 1.
FIG. 8 shows a burn-off degree and Brunauer, Emmett and Teller (BET) specific surface area of carbon black of Examples and Comparative Examples.
FIG. 9 shows a pore volume per unit weight according to a pore width of carbon black of the Examples and Comparative Examples. In FIG. 9, ▪ represents Example 1, ▲ represents Example 2, • represents Comparative Example 1, and * represents Comparative Example 2.
FIG. 10 shows normalized storage modulus results according to a measurement temperature of a dry electrode film of each of the Examples and Comparative Examples. In FIG. 10, ▪ represents Example 1, ▲ represents Example 2, • represents Comparative Example 1, and * represents Comparative Example 2.
FIG. 11 shows tensile strength and sheet resistance results of a dry electrode film of each of the Examples and Comparative Examples.
FIGS. 12 and 13 show rate capability results at 1C voltage and 2C voltage of a battery including an electrode of each of the Examples and Comparative Examples. In FIG. 12 and FIG. 13, ▪ represents Example 1, ▲ represents Example 2, • represents Comparative Example 1, and * represents Comparative Example 2.
FIG. 14 shows ionic resistance results of a battery including an electrode of each of the Examples and Comparative Examples. In FIG. 14, ▪ represents Example 1, ▲ represents Example 2, • represents Comparative Example 1, and * represents Comparative Example 2.

### DETAILED DESCRIPTION

Herein, some example embodiments of the present invention will be described in further detail with reference to the accompanying drawings. Terms or words used in the present specification and claims are not to be construed as being limited to general or dictionary meanings and are to be interpreted having meanings and concepts consistent with the technical spirit of the present invention on the basis of the principle that the inventor can appropriately define the concept of a term to best describe his or her invention. Therefore, the embodiments described herein and configurations shown in the drawings are example embodiments of the present invention and do not necessarily represent all embodiments within the technical spirit of the present invention. Accordingly, it is to be understood that various equivalents and modifications that can replace the embodiments may be present at the time of filing the present application.

Also, the expressions "comprise," "include," "comprising," and/or "including" used in this specification specify the presence of mentioned shapes, numbers, steps, operations, members, elements, and/or groups thereof, but do not exclude the presence or addition of one or more other shapes, numbers, steps, operations, members, elements, and/or groups thereof.

In addition, for purposes of illustration of the present invention, the accompanying drawings may not be drawn to scale, and the dimensions of some components may be exaggerated. Also, the same reference numerals may be assigned to the same components in different embodiments.

Although terms such as "first" and "second" may be used to describe various components, the components are not limited by such terms. The terms are used to distinguish one component from another component, and a first component may also be a second component unless particularly stated otherwise.

Throughout the specification, each component may be singular or plural unless particularly stated otherwise.

When an arbitrary configuration is described as being disposed "above (or below)" a component or "on (or under)" a component, this may not only mean that the arbitrary configuration is disposed in contact with an upper surface (or lower surface) of the component, but may also mean that another configuration may be interposed between the component and the arbitrary configuration disposed on (or under) the component.

Also, when a certain component is described as being "connected," "coupled," or "linked" to another component, it is to be understood that, although the components may be directly connected or linked to each other, one or more other components may be interposed between the two components, or the two components may be "connected." "coupled," or "linked" to each other through one or more other components. In addition, when a certain part is described as being electrically coupled to another part, this not only includes a case in which the two parts are directly connected, but also includes a case in which the two components are connected with one or more other devices disposed therebetween.

Throughout the specification, "A and/or B" means A, B, or A and B unless particularly stated otherwise. That is, the term "and/or" includes any and all combinations of a plurality of listed items. "C to D" means larger than or equal to C and smaller than or equal to D unless particularly stated otherwise.

In the present specification, "specific surface area" may mean a Brunauer, Emmett and Teller (BET) specific surface area. The specific surface area is measured by ISO 9277:2022. Furthermore, the pore size distribution is determined according to ISO 15901-2:2022.

In the present specification, "storage modulus" may be measured for a dry electrode film using a method described in an evaluation method below.

In the present specification, "tensile strength" may be measured for a dry electrode film using a method described in an evaluation method below.

The terms used in the present specification are for describing embodiments of the present disclosure and are not intended to limit the present disclosure.

### Electrode

An electrode according to an embodiment may be a positive electrode or a negative electrode depending on whether a positive electrode active material or a negative electrode active material is included as an electrode active material described below.

According to an embodiment, the electrode may be a positive electrode.

An electrode according to one or more embodiments includes a freestanding dry electrode film, wherein the freestanding dry electrode film includes an electrode active material, a binder, and a conductive additive, and the conductive additive includes a porous carbon black-based compound which has a specific surface area of 600 m²/g or more and exhibits a first maximum peak in a pore width range of 1 to 10 nm and a second maximum peak in a pore width range of 10 to 100 nm in a graph in which the x-axis represents the pore width and the y-axis represents a pore volume per unit weight of the porous carbon black-based compound.

The carbon black-based compound promotes nano-fibrillation of the binder, thereby also improving mechanical properties and electrical properties of a battery.

In an embodiment, the dry electrode film may have a storage modulus that is less than 300 MPa, for example, greater than or equal to 100 MPa and less than 300 MPa, at 60 °C. Within the above range, the nano-fibrillation of the fibrillable binder is promoted, and, thus, the mechanical properties of the electrode film can be improved. In an embodiment, the dry electrode film may have a storage modulus in a range from 100 MPa to 200 MPa at 60 °C. Within the above range, the mechanical properties of the electrode film can be improved even in a low content range of the fibrillable binder, and the sheet resistance of the electrode film can also be decreased.

The dry electrode film may improve the mechanical properties of the electrode by having a high tensile strength. The higher the tensile strength of the dry electrode film, the lower the possibility that cohesion of the electrode active material and the conductive additive due to the binder may break, resulting in increased reliability of the battery.

In an embodiment, the dry electrode film may have a tensile strength of 0.4 MPa or more. In an embodiment, the electrode may have a tensile strength of 0.45 MPa or more, for example, in a range from 0.45 MPa to 0.8 MPa. Within the above range, the mechanical properties of the electrode may be improved and the sheet resistance may be decreased.

As the freestanding dry electrode film, electrode powder including an electrode active material, a binder, and a conductive additive is manufactured into the form of a strip or a sheet having a certain (e.g., predetermined) thickness.

According to an embodiment, the electrode active material may be a positive electrode active material.

As the positive electrode active material, a compound capable of reversible intercalation and deintercalation of lithium (a lithiated intercalation compound) may be used. In an embodiment, one or more of composite oxides of lithium and a metal selected from cobalt, manganese, nickel, and a combination thereof may be used.

The composite oxides may be lithium transition metal composite oxides. Examples of the composite oxides may include lithium nickel oxide, lithium cobalt oxide, lithium manganese oxide, a lithium iron phosphate compound, cobalt-free nickel-manganese oxide, or a combination thereof.

As an example, a compound represented by any of the following chemical formulas may be used. LiₐA_{1-b}X_{b}O_{2-c}D_{c}(O.90≤a≤1.8, 0≤b≤0.5, 0≤c≤0.05); LiₐMn_{2-b}X_{b}O₄-_{c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{l1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

According to another embodiment, the electrode active material may be a negative electrode active material.

The negative electrode active material includes a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon may include graphite, such as natural graphite or artificial graphite, and examples of the amorphous carbon may include soft carbon, hard carbon, mesophase pitch carbide, and calcined coke.

In an embodiment, a Si-based negative electrode active material or an Sn-based negative electrode active material may be used as the material capable of doping and dedoping lithium. The Si-based negative electrode active material may be silicon, a silicon-carbon composite, SiOₓ (0<x≤2), an Si-based alloy, or a combination thereof.

The silicon-carbon composite may be a composite of silicon and amorphous carbon. According to an embodiment, the silicon-carbon composite may have a form including a silicon particle and amorphous carbon coated on a surface of the silicon particle.

In an embodiment, the silicon-carbon composite may further include crystalline carbon. For example, the silicon-carbon composite may include a core including crystalline carbon and a silicon particle and an amorphous carbon coating layer located on a surface of the core.

The binder is not particularly limited as long as the binder can be fibrillated in a dry electrode film manufacturing step which will be described below. The fibrillation may refer to dividing a polymer into fine fibers. For example, the fibrillation may be performed using a mechanical shear force or the like. A surface of the fibrillated polymer fiber may be unraveled, and a plurality of fine fibers may be generated. The generated fine fibers may cause the electrode active material and/or a conductive additive described below to be cohered to each other, thereby enabling a dry electrode film to be manufactured.

In an embodiment, the binder may include polytetrafluoroethylene (PTFE), a polyolefin, or a mixture thereof. In an embodiment, the binder may include PTFE, and, in an embodiment, may be PTFE. In an embodiment, the PTFE may be included in an amount of 60 wt% or more, for example, an amount in a range from 90 to 100 wt%, based on the entire weight of the binder.

In another embodiment, the binder may further include a non-fibrillable binder. For example, the non-fibrillable binder may include one or more of polyethylene oxide, polyvinylidene fluoride, and polyvinylidene fluoride-co-hexafluoropropylene.

In an embodiment, the binder may be included in a fibrillated state in the dry electrode film.

In one or more embodiments, the conductive additive includes a porous carbon black-based compound which has a specific surface area of 600 m²/g or more and exhibits a first maximum peak in a pore width range of 1 to 10 nm and a second maximum peak in a pore width range of 10 to 100 nm in a graph in which the x-axis represents the pore width and the y-axis represents the pore volume per unit area of the porous carbon black-based compound.

By having a specific surface area of 600 m²/g or more and exhibiting the first peak and the second peak, the carbon black-based compound can promote the nano-fibrillation of the fibrillable binder by increasing adhesion with the fibrillable binder. In particular, by exhibiting the first peak and the second peak, the carbon black-based compound can promote nano-fibrillation.

The specific surface area, the first maximum peak, and the second maximum peak may be standards for determining whether a dry electrode film can promote the nano-fibrillation of a fibrillable binder when the dry electrode film includes a carbon black-based compound, which has pores formed on a surface and an inside thereof, as a conductive additive. In an embodiment, the specific surface area, the first maximum peak, and the second maximum peak may be standards for determining whether a dry electrode film can promote the nano-fibrillation of a fibrillable binder when the dry electrode film includes a carbon black-based compound, which is subject to low-temperature heat treatment which will be described below, as a conductive additive.

In an embodiment, the carbon black-based compound may have a specific surface area in a range from 600 m²/g to 1,000 m²/g. In an embodiment, the carbon black-based compound may have a specific surface area in a range from 600 m²/g to 800 m²/g, and, in an embodiment, from 600 m²/g to 700 m²/g, for example 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, 1000m²/g. Within the above ranges, the nano-fibrillation of a fibrillable binder can be further promoted.

In an embodiment, the first peak of the carbon black-based compound may be present in a pore width range of 1 to 10 nm. In an embodiment, the first peak may be present in a pore width range of 3 to 8 nm. Here, the pore volume per unit area may be in a range from 0.2 to 1.2 cm³/g, from 0.4 to 1.2 cm³/g, or from 0.8 to 1.2 cm³/g.

In an embodiment, the second peak of the carbon black-based compound may be present in a pore width range of 10 to 100 nm. In an embodiment, the second peak may be present in a pore width range of 50 to 100 nm, or 60 to 100 nm. Here, the pore volume per unit area may be in a range from 1.0 to 2.0 cm³/g.

A carbon black-based compound that concurrently, or simultaneously, satisfies the specific surface area and the peaks may be prepared by low-temperature heat treatment. Herein, the low-temperature heat treatment will be described in further detail.

In an embodiment, the low-temperature heat treatment may be performed on the carbon black-based compound at a temperature of 650 °C or lower, for example, at a temperature in a range from 500 to 650 °C, for more than 0 minutes and less than or equal to 90 minutes. Within the above ranges, it may be easy to prepare a porous carbon black-based compound having the above-described specific surface area and pore distribution. In an embodiment, the low-temperature heat treatment may be performed at a temperature in a range from 600 to 650 °C for 30 minutes to 90 minutes.

In an embodiment, the low-temperature heat treatment may be performed under atmospheric conditions. In this case, it may be easy to prepare a porous carbon black-based compound having the above-described specific surface area and pore distribution.

In an embodiment, the low-temperature heat treatment may facilitate an amorphous carbon black-based compound to have the above-described specific surface area, first maximum peak, and second maximum peak.

In an embodiment, the carbon black-based compound may include one or more of carbon black, acetylene black, Ketjen black, channel black, furnace black, lamp black, and thermal black. In an embodiment, the carbon black-based compound may be carbon black.

In an embodiment, the carbon black-based compound may be included in an amount of 90 wt% or more, for example, an amount in a range from 95 to 100 wt% or an amount of 100 wt%, of the conductive additive. Within the above ranges, it may be easy to manufacture an electrode having excellent electrical properties and mechanical properties.

In an embodiment, the carbon black-based compound may be included in an amount in a range from 0.1 to 5 wt% of the dry electrode film. Within the above range, the mechanical properties and electrical properties of the electrode may be improved. In an embodiment, the carbon black-based compound may be included in an amount in a range from 0.1 to 3 wt%, or from 0.5 to 2 wt%.

In addition to the carbon black-based compound, the conductive additive may further include a conductive additive that is electrically conductive and does not cause chemical changes in a battery (herein, referred to as "conductive additive other than the carbon black-based compound"). For example, graphite, such as natural graphite or artificial graphite; a conductive fiber, such as a carbon fiber or a metal fiber; metal powder, such as fluorinated carbon, aluminum, or nickel powder; conductive whisker, such as zinc oxide or potassium titanate; conductive metal oxide, such as titanium oxide; a conductive material, such as a polyphenylene derivative, or the like may be used as the conductive additive other than the carbon black-based compound.

In an embodiment, in the freestanding dry electrode film, the electrode active material may be included in an amount in a range from 80 to 99 wt%, for example, from 90 to 99.5 wt%, the binder may be included in an amount in a range from 0.5 to 20 wt%, for example, from 0.5 to 10 wt%, and the conductive additive may be included in an amount in a range from 0.5 to 20 wt%, for example, from 0.5 to 10 wt%. Within the above ranges, it may be easy to manufacture the dry electrode film, and the mechanical strength may be improved by promoting fibrillation of PTFE in the electrode.

In an embodiment, the freestanding dry electrode film may be manufactured by the following steps:
(a) a process of preparing a powdery mixture including an electrode active material, a binder, and a conductive additive;
(b) a process of preparing a mixture mass by kneading the powdery mixture;
(c) a process of obtaining electrode powder by pulverizing the mixture mass; and
(d) a process of obtaining a freestanding dry electrode film by calendering the electrode powder.

First, the electrode active material, the binder, and the conductive additive are mixed to prepare a powdery mixture. The mixing is performed such that the electrode active material, the binder, and the conductive additive can be uniformly distributed in the mixture, and since the electrode active material, the binder, and the conductive additive are mixed in a powdery form, the mixing is not limited as long as simple mixing of the electrode active material, the binder, and the conductive additive is possible. However, since the mixture is for manufacturing a dry electrode film, the mixture does not include a solvent. The mixing may be performed by dry mixing, for example, performed by inputting the materials into a device such as a blender.

In an embodiment, although the mixing time is not particularly limited, the mixing may be performed for 1 second to 10 minutes, for example. Although the mixing speed is not particularly limited, the mixing speed may be appropriately controlled within a range of about 3,000 rpm to 30,000 rpm, for example. As a specific example, for high uniformity and control of the crystallinity of a binder resin, the electrode active material, the binder, and the conductive additive may be mixed at a speed of 5,000 rpm to 20,000 rpm for 30 seconds to 2 minutes, and, in an embodiment, at a speed of 10,000 rpm to 15,000 rpm for 30 seconds to 5 minutes, using a mixer to manufacture a dry electrode film.

Next, a kneading process for fibrillating the binder is performed on the mixture obtained above. The kneading is a step of forming a mixture mass of 100 wt% solid content by combining or connecting the electrode active materials and/or the conductive additive while the binder is fibrillated.

In an embodiment, the kneading in step (b) may be controlled at a speed of 10 rpm to 100 rpm. For example, the kneading may be controlled at a speed of 40 rpm or more or 70 rpm or less within the above range. The kneading may be performed for 1 minute to 30 minutes, for example. For example, within the above ranges, the kneading may be performed at a speed of 40 rpm to 70 rpm for 3 minutes to 7 minutes. In the kneading, a shear rate may be controlled within a range of 10/s to 500/s. In an embodiment of the present invention, the kneading may be performed for 1 minute to 30 minutes, and the shear rate may be controlled within a range of 30/s to 100/s.

In an embodiment, the kneading step may be performed at a high temperature and a pressure higher than or equal to normal pressure. In an embodiment, the kneading step may be performed at a pressure higher than normal pressure. In an embodiment, the kneading may be performed at a temperature in a range from 70 °C to 200 °C, and, in an embodiment, from 90 °C to 150 °C.

In an embodiment, the kneading may be performed at a pressure higher than or equal to normal pressure, and, in an embodiment, at a pressure in a range from 1 atm to 3 atm, and, in an embodiment, at a pressure in a range from 1.1 atm to 3 atm. When the kneading is performed at an excessively high pressure that deviates from the above range, excessive shear force and pressure may cause the formed fibers to be cut, or the density of the mixture mass may be too high. That is, according to the present disclosure, the effects intended by the present invention can be achieved when a low shear mixing process is performed at a high temperature and a pressure higher than or equal to normal pressure instead of performing high shear mixing.

Next, a step of obtaining electrode powder by pulverizing the mixture mass prepared by the kneading step again is performed.

The mixture mass prepared through the kneading may be calendered immediately, but, in this case, the mixture mass may need to be prepared in the form of a thin film by being pressed at a strong pressure and high temperature, and, accordingly, a problem in which the density of the film excessively increases or a film having a uniform density cannot be obtained may occur. Therefore, according to an embodiment of the present invention, the prepared mixture mass undergoes the pulverizing step.

The pulverizing is not limited but may be performed using a known pulverizing device such as a blender or a grinder. In an embodiment of the present invention, the pulverizing speed may be controlled within a range of 3,000 rpm to 30,000 rpm. In an embodiment, the pulverizing time may be appropriately controlled within a range of 1 second to 10 minutes. However, the pulverizing speed and pulverizing time are not particularly limited to the above ranges. In an embodiment, the pulverizing may be performed at a speed of 5,000 rpm to 20,000 rpm for 30 seconds to 10 minutes or may be performed at a speed of 10,000 rpm to 18,000 rpm for 30 seconds to 5 minutes. Within the above ranges, pulverizing may be sufficiently performed, thereby facilitating film formation and decreasing the degree to which fine powder is generated.

The electrode powder is heated and pressed to manufacture a dry electrode film. The electrode powder obtained by completing the pulverizing step as above is input to the calendering process.

The electrode powder is heated and pressed and processed into a sheet-type dry electrode film by the calendering process. The calendering process may be performed using a pair of calendering rollers facing each other. In an embodiment of the present invention, the calendering process may be performed by a method in which the electrode powder passes between a plurality of calendering rollers.

The electrode powder may be pretreated before performing the calendering process.

The pretreatment process may be performed by a method in which heat is applied to the electrode powder to maintain the temperature of the powder at 80 °C or, in an embodiment, at 100 °C or more, for a certain (e.g., predetermined) amount of time. In an embodiment, the pretreatment process may be performed for 1 minute or more, and the pretreatment process time may be appropriately adjusted depending on the amount of powder. For example, the temperature of the powder may be maintained at 80 °C or more for 1 minute or more or may be maintained at 100 °C or more for 1 minute or more. Alternatively, to prevent or substantially prevent degradation of an electrode component, for example, a binder resin, included in the electrode powder, the heating temperature of the electrode powder may be controlled to be lower than the melting point of the binder resin. For example, the heating temperature of the electrode powder may be controlled to be lower than 320 °C. The pretreatment process may be performed using a commonly used heating device such as a convection oven or an infrared heating device. Here, the electrode powder may not stagnate while being stirred and heated.

The electrode may further include a current collector.

The current collector is not particularly limited as long as the current collector provides high electrical conductivity and does not cause chemical changes in a battery. For example, stainless steel, aluminum, nickel, titanium, calcined carbon, copper, or aluminum, stainless steel, copper foil, nickel foil, stainless steel foil, titanium foil, nickel foam, copper foam, or a polymer substrate having a surface coated with a conductive metal and treated with carbon, nickel, titanium, silver, or the like may be used as the current collector. In an embodiment, the current collector may have irregularities (e.g., fine irregularities) formed on a surface thereof to increase the adhesion of an electrode active material and may be in various forms, such as any of a film, a sheet, a foil, a net, a porous body, a foam, and a nonwoven body. In an embodiment of the present invention, the current collector may have a thickness in a range from 10 µm to 50 µm, but the thickness is not particularly limited thereto. For example, the current collector may have a thickness in a range from 10 µm to 20 µm.

In an embodiment, the electrode may include the current collector and the dry electrode film laminated on the current collector.

### Rechargeable lithium battery

According to one or more embodiments, a rechargeable lithium battery is provided, wherein the rechargeable lithium battery comprises an electrode according to an embodiment of the present invention.

In an embodiment, the battery may comprise a positive electrode according to an embodiment, and a negative electrode according to an embodiment. In another embodiment, the battery may comprise a positive electrode and a negative electrode according to an embodiment. In another embodiment, the battery may comprise a positive electrode and a negative electrode according to an embodiment.

The negative electrode may be manufactured using a composition comprising the above-described negative electrode active material. The negative electrode active material may be the same as described above. The composition may further comprise a binder and/or a conductive agent. The negative electrode may be manufactured through a wet process. The binder and the conductive agent may be selected from common types known to those skilled in the art.

The positive electrode may be manufactured using a composition comprising the above-described positive electrode active material. The positive electrode active material may be the same as described above. The composition may further comprise a binder and/or a conductive agent. The above anode may be manufactured through a wet process. The binder and conductive material may be selected from common types known to those skilled in the art.

The rechargeable lithium battery may further comprise electrolyte solution.

The rechargeable lithium battery may further include an electrolyte. In an embodiment, the electrolyte for the rechargeable lithium battery includes a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof, and may be used alone or in combination of two or more.

In an embodiment, if a carbonate-based solvent is used, a cyclic carbonate and a chain-based carbonate may be used in combination.

Depending on a type of the rechargeable lithium battery, a separator may be present between the positive electrode and the negative electrode. The separator may include any of polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any selected from polymer polyolefin, such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., Teflon), or a copolymer or mixture of two or more thereof.

The organic material may include a polyvinylidene fluoride-based polymer or a (meth)acrylic polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

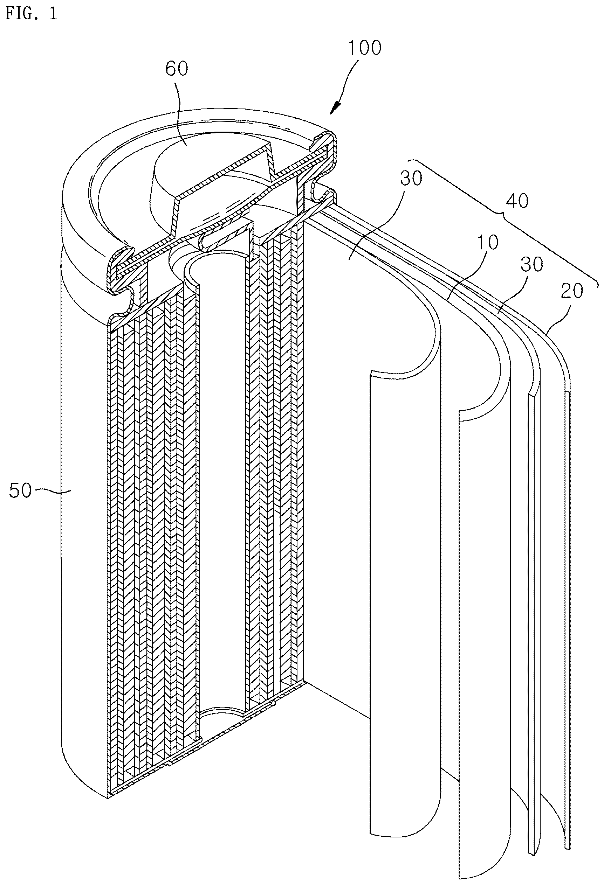

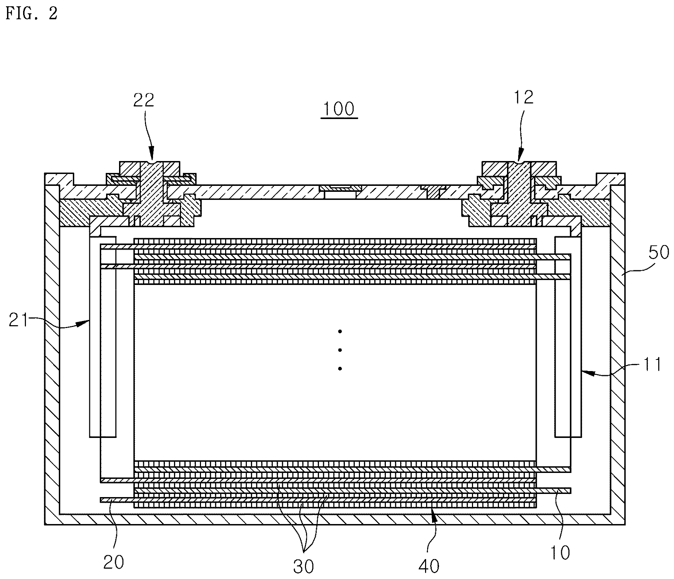

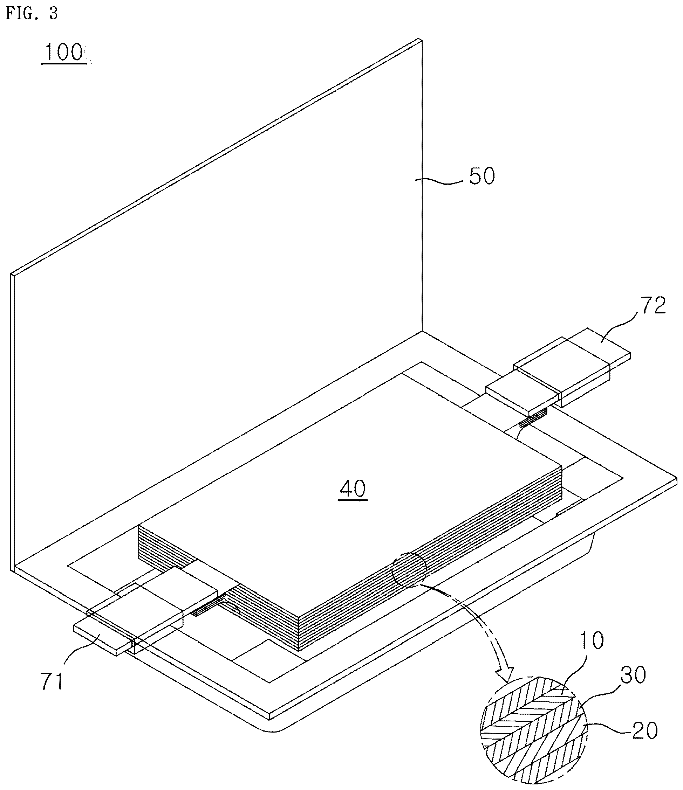

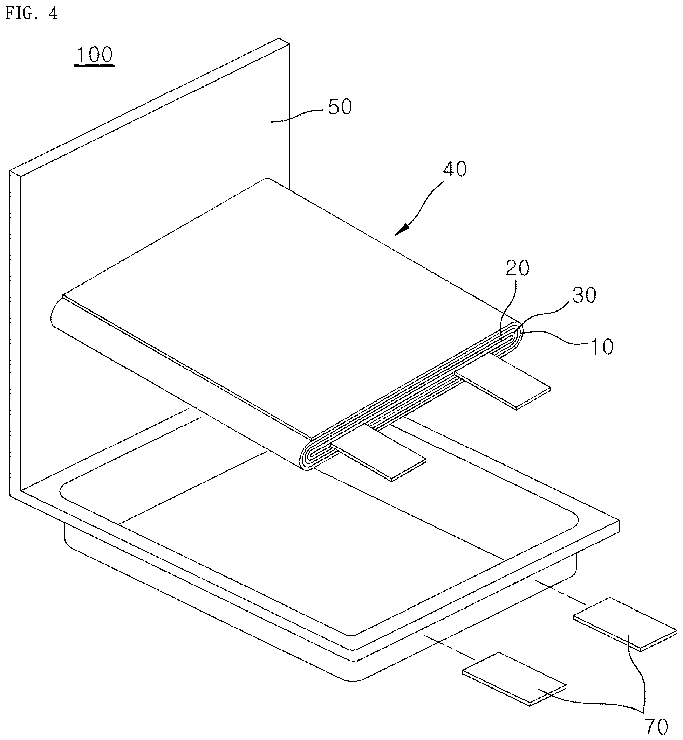

The rechargeable lithium battery may be classified as any of cylindrical, prismatic, pouch, coin-type batteries, and the like depending on its shape. FIGS. 1 to 4 are schematic views illustrating a rechargeable lithium battery according to some embodiments. FIG. 1 shows a cylindrical battery; FIG. 2 shows a prismatic battery; and FIGS. 3 and 4 show pouch-type batteries. Referring to FIGS. 1 to 4, a rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing current formed in the electrode assembly 40 to the outside.

The rechargeable lithium battery according to an embodiment may be applied to or used in automobiles, mobile phones, and/or various types of electric devices, as non-limiting examples.

The above-described rechargeable lithium battery may be used to manufacture a battery pack. A battery pack according to one or more embodiments of the present invention includes an assembly of electrically connected individual batteries and a pack housing accommodating the same. The battery pack may further include components such as a busbar, a cooling unit, an external terminal, and the like for electrical connection of the batteries.

The battery pack may be mounted in a vehicle, for example. For example, the vehicle may be an electric vehicle, a hybrid vehicle, or a plug-in hybrid vehicle. The vehicle may be a four-wheel vehicle or a two-wheel vehicle. A vehicle according to one or more embodiments of the present invention includes the battery pack according to an embodiment of the present invention. The vehicle operates by receiving power from the battery pack according to one or more embodiments of the present invention.

Herein, some examples and comparative examples of the present invention will be described. However, the following examples are merely example embodiments of the present invention, and the present invention is not limited to the following examples.

### Example 1

### Heat treatment of carbon black

Carbon black (amorphous, LITX66, Cabot) was modified by heat treatment. Specifically, 5 g of carbon black was input to a furnace, heat-treated at 650 °C for 30 minutes under atmospheric conditions, and cooled at room temperature to prepare modified carbon black.

### Manufacture of dry electrode film

96.7 wt% of lithium cobalt oxide as a positive electrode active material, 1.8 wt% of polytetrafluoroethylene (PTFE) as a binder, and 1.5 wt% of the modified carbon black were input to a blender and mixed at 10,000 rpm for 1 minute to obtain a mixture. Next, the obtained mixture was input to a kneader and kneaded at 110 °C at a speed of 60 rpm for 5 minutes to obtain a mixture mass, and then the mixture mass was input to the blender and pulverized at 14,000 rpm for 60 seconds to obtain electrode powder. Then, the electrode powder was repeatedly pressed using calendaring rolls (roll diameter: 200 mm, roll temperature: 70 °C) to obtain a dry electrode film (thickness: 150 µm).

### Manufacture of electrode

The manufactured dry electrode film was laminated on a carbon-coated aluminum current collector to manufacture an electrode.

### Example 2

### Heat treatment of carbon black

Carbon black was heat-treated in the same manner as in Example 1 except that in Example 1, the heat treatment was performed at 650 °C for 90 minutes.

### Manufacture of dry electrode film and electrode

A dry electrode film and an electrode were manufactured in the same manner as in Example 1 using the modified carbon black.

### Comparative Example 1

A dry electrode film was manufactured in the same manner as in Example 1 using carbon black (amorphous, LITX66, Cabot) (not heat-treated).

### Comparative Example 2

Carbon black was heat-treated in the same manner as in Example 1 except that in Comparative Example 2, the heat treatment was performed at 650 °C for 120 minutes under atmospheric conditions. A dry electrode film and an electrode were manufactured in the same manner as in Example 1 using the heat-treated carbon black.

The following physical properties were evaluated for the dry electrode films and carbon black manufactured in the Examples and Comparative Examples.

### TEM analysis of carbon black

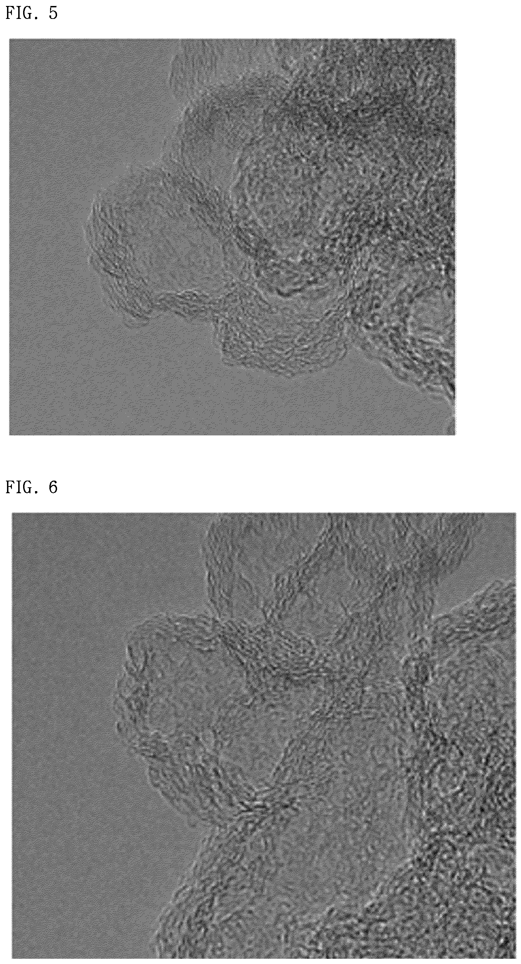

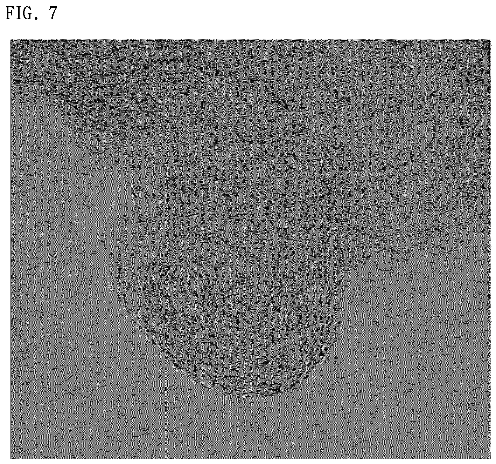

TEM analysis was performed on the carbon black of Example 1, Example 2, and Comparative Example 1. The presence or absence of internal pores in the carbon black can be evaluated through TEM analysis. Results thereof are shown in FIGS. 5 to 7. FIGS. 5 and 6 are TEM images of carbon black heat-treated in Example 1 and Example 2, respectively, and FIG. 7 is a TEM image of carbon black of Comparative Example 1.

As shown in FIGS. 5 and 6, it can be confirmed that internal pores were formed in the carbon black. On the other hand, as shown in FIG. 7, it can be confirmed that no internal pores were formed in the carbon black.

### Burn-off degree and BET specific surface area of carbon black

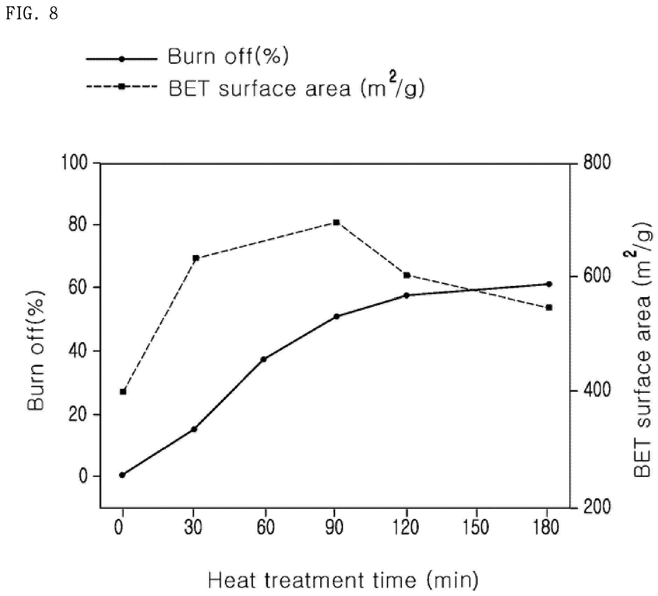

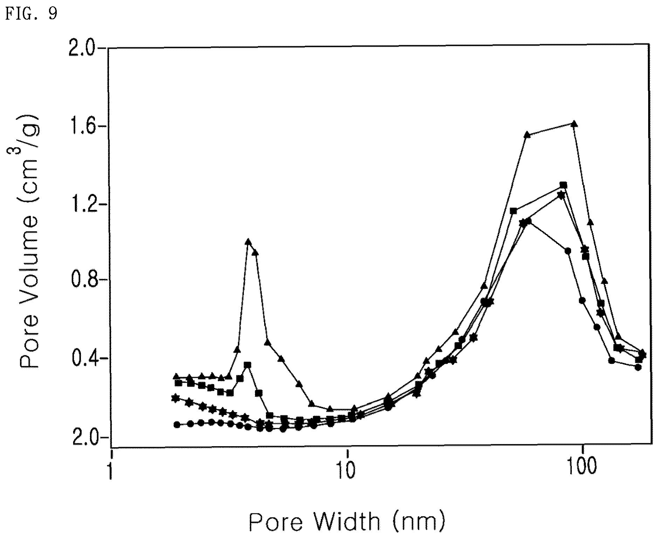

The burn-off degree and BET specific surface area were evaluated for carbon black of the Examples and Comparative Examples, and results thereof are shown in FIGS. 8 and 9.

The burn-off degree was evaluated using a method of measuring a weight decrease before and after the heat treatment.

The BET specific surface area was evaluated by BET analysis (Quantachrome, Autosorb IQ). The specific surface area was measured by ISO 9277:2022. Furthermore, the pore size distribution was determined according to ISO 15901-2:2022.

As shown in FIG. 8, it can be confirmed that the burn-off degree of carbon black increased according to the reaction between oxygen and the carbon black caused by the heat treatment, which means that the amount of carbon black decreased accordingly.

As further shown in FIG. 8, it can be confirmed that the specific surface area of carbon black increases with heat treatment time, and it can be confirmed that the specific surface area decreases when heat treatment continues.

### Pore distribution of carbon black

The pore distribution of the carbon black of the Examples and Comparative Examples was evaluated, and results thereof are shown in FIG. 9.

As shown in FIG. 9, the carbon black of Examples 1 and 2 exhibited a first maximum peak in a pore width range of 1 to 10 nm and a second maximum peak in a pore width range of 10 to 100 nm in a graph in which the X-axis represents the pore width and the Y-axis represents the pore volume per unit weight.

On the other hand, as shown in FIG. 9, it can be seen that the carbon black of Comparative Examples 1 and 2 did not exhibit the first maximum peak.

### Evaluation of storage modulus of dry electrode film

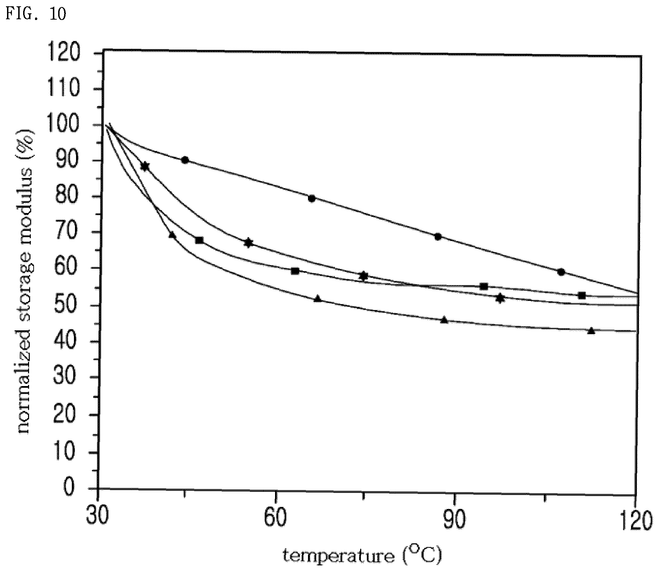

A storage modulus was obtained at each measurement temperature of the dry electrode films of the Examples and Comparative Examples according to dynamic mechanical analysis (DMA). The storage modulus was measured by laminating a plurality of dry electrode films each having a thickness of 15 µm to manufacture a sample having a thickness of 600 µm and a circular cross-section having a diameter of 8 mm and increasing the temperature of the sample at a temperature increase rate of 10 °C/min from 0 °C to 150 °C at a frequency of 1 Hz, a strain of 5%, and a normal force of 100 N in a temperature sweep test using an Advanced Rheometer Expansion System (ARES, TA Instruments). Results thereof are shown in FIG. 10.

As shown in FIG. 10, it can be seen that the dry electrode films of the Examples exhibited a lower storage modulus at the same measurement temperature compared to the dry electrode films of the Comparative Examples. This means that in the dry electrode film, a contact area between carbon black and PTFE may increase, and thus PTFE fibrillation may easily occur. Accordingly, since the fibrillation of PTFE is promoted, there may be an effect of increasing the tensile strength of the electrode.

### Measurement of tensile strength and sheet resistance of dry electrode film

The tensile strength and sheet resistance of the dry electrode films manufactured in the Examples and Comparative Examples were measured.

The tensile strength was evaluated using a universal testing machine (UTM, H5KT, Tinius Olsen). The sheet resistance was evaluated using a low resistance meter (Mitsubishi, MCP-T610).

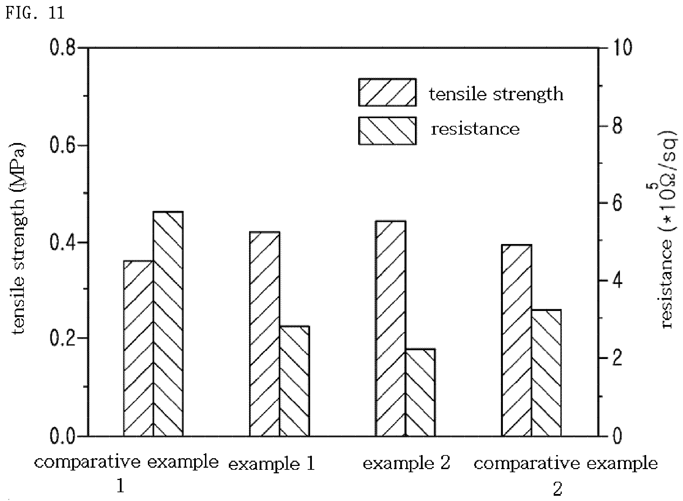

Results thereof are shown in FIG. 11. As shown in FIG. 11, the dry electrode films of the Examples exhibited a higher tensile strength and a lower sheet resistance compared to the dry electrode films of the Comparative Examples.

### Evaluation of rate capability of electrode

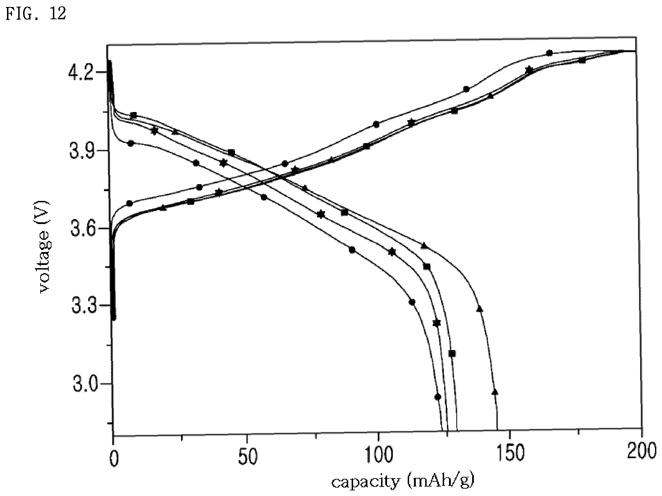

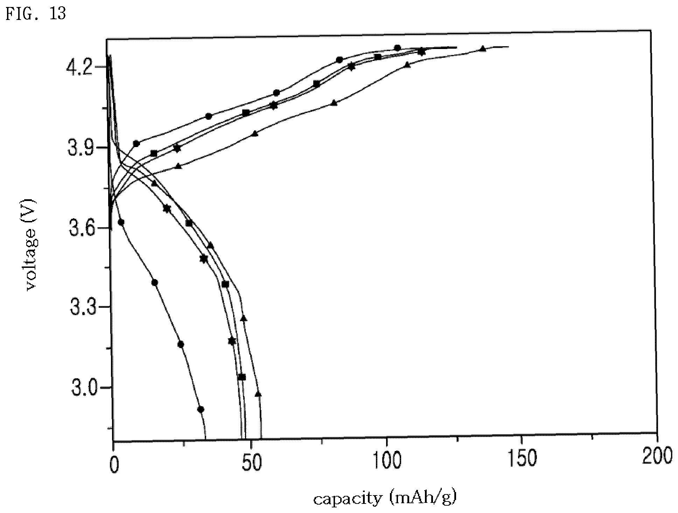

The rate capability of the electrodes of the Examples and Comparative Examples was evaluated, and the rate capability was evaluated by charging at 0.2 C and discharging at each of 1C and 2C. Results thereof are shown in FIGS. 12 and 13.

### Evaluation of ionic resistance according to application of electrode

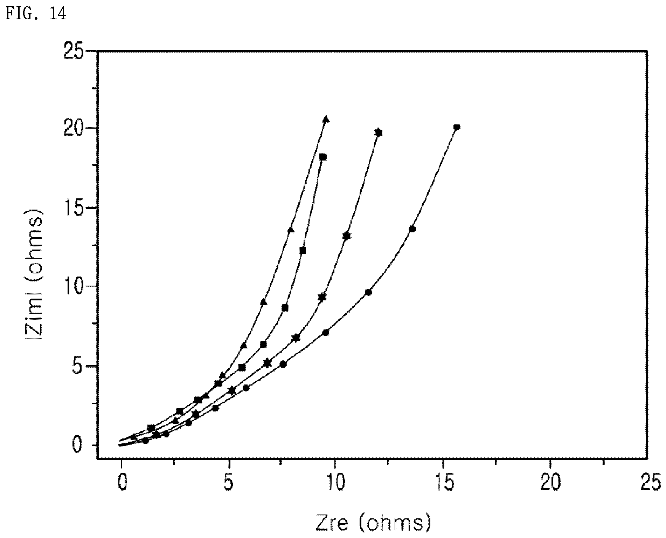

The ionic resistance was evaluated for the electrodes of the Examples and Comparative Examples, and the ionic resistance was evaluated by an electrochemical impedance spectroscopy method. Results thereof are shown in FIG. 14.

### Evaluation of service life according to application of electrode

97 wt% of artificial graphite as a negative electrode active material, 1.5 wt% of carbon nanotubes as a conductive additive, and 1.5 wt% of styrene-butadiene rubber were mixed, and water was added to the mixture to prepare a negative electrode slurry.

The prepared negative electrode slurry was applied on copper foil, and the negative electrode slurry and the copper foil were dried and rolled to manufacture a negative electrode.

The negative electrode and the positive electrodes manufactured in the Examples and Comparative Example were used, a polyethylene separator (STAR 20, Asahi) was used as a separator, and a mixed solvent of ethylene carbonate (EC), ethyl methyl carbonate (EMC), and dimethyl carbonate (DMC) having a volume ratio of 3:3:4 in which 1.15M LiPF₆ was dissolved was used as an electrolyte to manufacture lithium-ion rechargeable batteries having a capacity of 2,000 mAh.

The manufactured lithium-ion rechargeable batteries were charged at a constant current of 0.2 C from 2.8 V to an upper limit voltage of 4.3 V at 25 °C, were charged at a constant voltage until the current decreased to 0.05 C, which was a termination condition, and then were discharged at 0.33 C until the voltage decreased to a discharge cut-off voltage of 3.0 V. Such a cycle was repeated 50 times.

The manufactured lithium-ion rechargeable batteries were charged at a constant current of 0.2 C from 2.8 V to an upper limit voltage of 4.3 V at 25 °C, were charged at a constant voltage until the current decreased to 0.05 C, which was a termination condition, and then were discharged at 1 C until the voltage decreased to a discharge cut-off voltage of 3.0 V. Such a cycle was repeated 50 times.

The batteries having the electrodes of the Examples exhibited a higher capacity and efficiency at the same cycle number compared to the batteries having the electrodes of the Comparative Examples. In particular, the battery having the electrode of Example 1 exhibited a higher capacity and efficiency at the same cycle number compared to the battery having the electrode of Example 2.

According to embodiments of the present invention, an electrode includes a dry electrode film and promotes the nano-fibrillation of a fibrillable binder, thereby also improving mechanical properties and electrical properties of a battery.

However, aspects and effects that can be obtained through the present invention are not limited to the those described above, and other aspects and technical effects will be clearly understood by those skilled in the art from the description of the present invention given above.

Although the present invention has been described above with reference to some example embodiments and drawings, the present invention is not limited thereby, and various modifications and changes may be made by those of ordinary skill in the art to which the present invention pertains within the technical spirit of the present invention and the scope equivalent to the scope of the claims below.

## Claims

1. An electrode comprising:
a freestanding dry electrode film,
wherein the freestanding dry electrode film comprises an electrode active material, a binder, and a conductive additive, and
the conductive additive comprises a porous carbon black-based compound which has a specific surface area of 600 m²/g or more measured by ISO 9277:2022 and exhibits a first maximum peak in a pore width range of 1 to 10 nm and a second maximum peak in a pore width range of 10 to 100 nm in a graph in which the x-axis represents the pore width and the y-axis represents a pore volume per unit weight of the porous carbon black-based compound, wherein the pore size distribution is determined according to ISO 15901-2:2022.

2. The electrode as claimed in claim 1, wherein the specific surface area of the carbon black-based compound is in a range from 600 m²/g to 1,000 m²/g measured by ISO 9277:2022.

3. The electrode as claimed in claim 1 or 2, wherein the first peak is present in a pore width range of 3 to 8 nm, and the pore volume per unit weight is in a range from 0.2 to 1.2 cm³/g.

4. The electrode as claimed in any one of the preceding claims, wherein the second peak is present in a pore width range of 50 to 100 nm, and the pore volume per unit weight is in a range from 1.0 to 2.0 cm³/g.

5. The electrode as claimed in any one of the preceding claims, wherein the carbon black-based compound comprises one or more of carbon black, acetylene black, Ketjen black, channel black, furnace black, lamp black, and thermal black.

6. The electrode as claimed in any one of the preceding claims, wherein the carbon black-based compound is included in an amount of 90 wt% or more of the conductive additive.

7. The electrode as claimed in any one of the preceding claims, wherein the binder is included in a fibrillated state in the dry electrode film.

8. The electrode as claimed in any one of the preceding claims, wherein the binder comprises polytetrafluoroethylene, a polyolefin, or a mixture thereof.

9. The electrode as claimed in any one of the preceding claims, wherein the electrode active material is a positive electrode active material or a negative electrode active material.

10. The electrode as claimed in any one of the preceding claims, wherein the carbon black-based compound is prepared by subjecting the carbon black-based compound to heat treatment at a temperature of 650 °C or lower for more than 0 minutes and less than or equal to 90 minutes.

11. A rechargeable lithium battery comprising the electrode of any one of the preceding claims.
